# EUROPÄISCHE PATENTANMELDUNG

(11) **EP 1 947 912 A2**
(43) Veröffentlichungstag der Anmeldung: **23.07.2008**
(21) Anmeldenummer: 08000934.3
(22) Anmeldetag: 18.01.2008
(51) Int. Cl.: H05B 37/02

(54) **Bewegungssensorgesteuerte Leuchtenvorrichtung**

(30) Priorität: 19.01.2007 DE 202007001149 U
(71) Anmelder: Steinel GmbH, 33442 Herzebrock-Clarholz (DE)
(72) Erfinder: Steinel, Heinrich Wolfgang, 86825 Bad Wörishofen (DE); Kumpost, Roman, Dr. M., 46001 Liberec (CZ)
(74) Vertreter: Behrmann, Niels

(57) **Zusammenfassung**

Die Erfindung betrifft eine bewegungssensorgesteuerte Leuchtenvorrichtung mit einem auf einem Befestigungssockel (12; 20) gehaltenen, mit seinen Außenwänden einen lichten Innen- und/oder Zwischenraum (28) außerhalb des Befestigungssockels begrenzenden ersten Leuchtmittel (14; 22), insbesondere einer Gasentladungslampe, und einem zum Aktivieren oder Deaktivieren der ersten Leuchtmittel als Reaktion auf eine erfasste Bewegung eingerichteten Bewegungssensor (26; 32), wobei der Bewegungssensor ein auf einem Trägermodul (26) gebildeter Mikrowellensensor mit einer Sende- und/oder Empfangsantenne (16; 32) und einer zugeordneten Sensorelektronik ist, das so auf oder in dem Befestigungssockel (12; 20) vorgesehen ist, dass das Trägermodul mit zumindest einem Teilbereich in dem Innen- und/oder Zwischenraum aufgenommen ist, wobei zweite Leuchtmittel (40; 42; 50) auf oder an dem Befestigungssockel vorgesehen und so ausgerichtet sind, dass eine Lichtemission der zweiten Leuchtmittel einen Emissionsschwerpunkt in einer einem Netzanschlussbereich (10) des Befestigungssockels (12; 20) entgegengesetzten Richtung ausbildet.

## Beschreibung

Die Erfindung betrifft eine bewegungssensorgesteuerte Leuchtenvorrichtung nach dem Oberbegriff des Anspruchs 1. Derartige Vorrichtungen sind beispielsweise aus der DE 299 03 904 der Anmelderin bekannt und basieren auf dem Prinzip, gängige Leuchtmittel -- Glühlampen, Energiesparlampen o.ä. -- in möglichst kompakter Weise mit einem Bewegungsdetektor zu verbinden, um das Leuchtmittel dann bewegungssteuert aktivieren und deaktivieren zu können.

In vorteilhafter Weise nutzt dabei das Trägermodul den von den ersten Leuchtmitteln bestimmten Innen- bzw. Zwischenraum und sieht dort insbesondere die Sensorelektronik mit Sende- und/oder Empfangsantenne vor; nicht nur wird dadurch vermieden, dass diese zusätzlichen Module in den Bewegungssockel selbst integriert werden müssen; auch findet durch diese Maßnahme eine Trennung der Sensorelektronik von den im Befestigungssockel bereits vorhandenen Schaltungen (insbesondere einem üblichen elektronischen Vorschaltgerät (EVG) für die Leuchtmittel) statt, so dass insbesondere auch aus strahlungstechnischer und thermischer Sicht der Bewegungssensor einfach und platzsparend aufgenommen werden kann, ohne dass etwa die -- temperaturempfindliche -- Sensorelektronik von der Leuchtmittel-Vorschaltelektronik nachteilig erwärmt werden würde.

Die mikrowellenbasierte Bewegungserfassung in Verbindung mit der sehr kompakten Anordnung dieses aus dem Stand der Technik bekannten Produkts ermöglicht es, dass derartige bekannte Vorrichtungen häufig in Innenräumen, bevorzugt auch hinter Lampenschirmen eingesetzt werden -- die Mikrowellentechnologie gestattet die Bewegungserfassung von Personen zum Einschalten der Vorrichtung verborgen hinter einem Lampenschirm, so dass auch eine Bewegungserfassung nicht ästhetisch stören würde.

Gerade jedoch in einer Verwendung als Leuchtenvorrichtung für eine Hängeleuchte (d.h. etwa eingeschraubt in die Leuchtmittelfassung einer etwa über einem Tisch od.dgl. hängenden Leuchte, bei abwärts auf die Tischoberfläche gerichtetem ersten Leuchtmittel) ist jedoch häufig eine (ergänzende) Beleuchtung gewünscht, die nicht bewegungs- bzw. anwesenheitsgesteuert ist und insbesondere auch ein begrenztes, vorteilhaft abwärts gerichtetes Beleuchtungsvolumen bereitstellt. Hinzu kommt der Umstand, dass, entsprechend den Ausbildungsformen gängiger Energiesparleuchten, die röhrenförmigen, langgestreckten, gewendelten oder gebogenen Leuchtmittelröhren nur eine vergleichsweise schwache Strahlungswirkung in einer axialen Richtung der Vorrichtung besitzen, d.h. dem (Schraub-) Sockel entgegengesetzt und im hypothetischen Anwendungsfall einer Hängeleuchtenbefestigung auf eine unterliegende Fläche gerichtet. Gängige Leuchtmittel bzw. Energiesparlampen bieten jedoch keine Möglichkeit zur ergänzenden Beleuchtung in dieser Richtung, noch würden etwa die beengten Platzverhältnisse unter einem Lampenschirm Raum für eine zusätzliche Lichtquelle anbieten.

Aufgabe der vorliegenden Erfindung ist es daher, eine gattungsgemäße bewegungssensorgesteuerte Leuchtenvorrichtung im Hinblick auf ihre universelle Verwendbarkeit speziell auch für einen Hängebetrieb od.dgl. zu verbessern, wobei die Möglichkeit zu einer verbesserten Lichtemission in axialer Richtung geboten werden soll und idealerweise diese axiale Beleuchtung auch unabhängig von dem Bewegungssensor, insbesondere in einem Dauerlichtbetrieb, betrieben werden kann.

Die Aufgabe wird durch die Bewegungsgestaltung der Leuchtenvorrichtung mit den Merkmalen des Hauptanspruchs gelöst; vorteilhafte Weiterbildungen der Erfindung sind in den Unteransprüchen beschrieben.

In erfindungsgemäß vorteilhafter Weise werden zunächst die mit der Vorrichtung gemäß DE 299 03 904 erreichten Vorteile realisiert (welche im Hinblick auf ihre konstruktive Realisierung, die Ausgestaltung der Leuchtmittel neben Vorschaltelektronik sowie Bewegungssensorik als zur Erfindung gehörig in die vorliegende Offenbarung einbezogen gelten soll), als auch zusätzlich und vorteilhaft erreicht, dass die zweiten Leuchtmittel, weiterbildungsgemäß mittels mindestens einer LED realisiert, eine (bevorzugt permanente) und achsparallel entlang der Anordnung, d. h. bei Hängemontierung auf eine unterliegende Fläche gerichtete Beleuchtungsemission ermöglichen.

Auf diese Weise ist dann, besonders günstig für Tischleuchten in Restaurants, Konferenzräumen od.dgl. geeignet, auch im Fall keiner detektierten Bewegung, d.h. typischerweise abgeschalteten ersten Leuchtmitteln, eine (Kaltlicht-) Beleuchtung geringer Leuchtleistung und entsprechend geringem Energieaufwand vorhanden, welche dann in einem Leuchtbetrieb der ersten Leuchtmittel (also typischerweise einer Gasentladungsleuchte mit gebogenen oder gewendelten Röhren) für eine zusätzliche Beleuchtung außerhalb der (typischerweise radialen) Beleuchtungs-Hauptrichtung der ersten Leuchtmittel sorgt. Damit wird dann auch in günstiger Weise ein Kompromiss zwischen den jeweils eigene Vorteile aufweisenden einsetzbaren Leuchtmitteltypen geschaffen, wobei erfindungsgemäß bevorzugt Gasentladungs-Leuchtmittel für die (bewegungsgesteuert zu schaltenden) ersten Leuchtmittel und eine LED (geeignet wäre auch eine LED-Gruppierung od.dgl.) für die zweiten Leuchtmittel vorzusehen sind. Vorteilhaft würde zudem die Realisierung als LED sich in keiner Weise störend auf die Funktionalität der Sensorik im Innen- bzw. Zwischenraum auswirken.

Im Zusammenhang mit der vorliegenden Erfindung ist dabei als Innen- und/oder Zwischenraum jeglicher, oberhalb des Befestigungssockels gelegener Raum zu verstehen, welcher durch Abschnitte des Leuchtmittels bestimmt, definiert bzw. begrenzt wird, wobei derartige Innen- bzw. Zwischenräume ansonsten ungenutzt blieben. Insbesondere im Fall von röhrenförmigen ersten Leuchtmitteln -- langgestreckten, gebogenen oder gewendelten Leuchtmittelröhren -- sind als erfindungsgemäße Innen- bzw. Zwischenräume sämtliche Raumbereiche zu verstehen, die innerhalb einer um das Leuchtmittel gelegten, gedachten Schale liegen.

Dabei ist die Erfindung nicht auf eine spezielle Form oder Ausführung eines Leuchtmittels beschränkt.

So ist es nämlich insbesondere bevorzugt, die ersten Leuchtmittel als Gasentladungs-Leuchtmittel zu realisieren, wobei eine zugehörige Entladungsröhre in erfindungsgemäßer Weise vor bzw. um die Sende- bzw. Empfangsantenne herum angeordnet ist, und wobei weiter bevorzugt diese Sende- bzw. Empfangsantenne endseitig an oder auf einem flachen Substrat ausgebildet ist.

Erfindungsgemäß enthält der Befestigungssockel lediglich die herkömmlicherweise auch schon in einem solchen Sockel vorhandene Vorschaltelektronik für die ersten Leuchtmittel (EVG), und lediglich im Rahmen einer möglichen Weiterbildung könnte dieser Sockel zusätzlich die (kompakte) Steuer- bzw. Auswertelektronik für den Bewegungssensor enthalten.

Alternativ ist es möglich, diese Sensor-Elektronikbauelemente ebenfalls auf dem (flächigen) Träger für die Sende-/Empfangsantenne vorzusehen, was dann die vollständige Realisierung des Bewegungssensors als Modul und damit die einfache Nachrüstung bestehender Sensorleuchten (etwa durch Einstecken des Sensorträgers in den Sockel zwischen den Leuchtmitteln) ermöglicht.

In erfindungsgemäß vorteilhafter Weiterbildung ist es zudem vorgesehen, die Leuchtenvorrichtung mit einer Helligkeits-und/oder Zeitsteuereinheit zu versehen, die etwa im Fall einer Helligkeitssteuerung, die weiter bevorzugt eigenlichtkompensiert ist, eine Aktivierung oder Deaktivierung der ersten und/oder zweiten Leuchtmittel in Abhängigkeit von einem Umgebungslichtpegel vornimmt. Damit kann beispielsweise ein Leuchtenbetrieb in heller Tageslichtumgebung (trotz Bewegungserfassung) verändert werden. Ergänzend oder alternativ sorgt die weiterbildungsgemäße Zeitsteuereinheit dafür, dass, etwa zu vorbestimmten Abendstunden, die Leuchtenvorrichtung im Dauerbetrieb betrieben wird, während ansonsten lediglich bedarfsweise, nämlich in Folge erfasster Bewegung eines Objektes, ein Leuchtenbetrieb mit vorbestimmter Leuchtdauer ausgelöst wird.

In der konkreten konstruktiven Realisierung gibt es zahlreiche Möglichkeiten, die erfindungsgemäß und bevorzugt als LED zu realisierenden zweiten Leuchtmittel an bzw. in der Anordnung zu befestigen: Zum einen ist es günstig, bevorzugt, die zweiten Leuchtmittel auf oder in ring- bzw. scheibenförmige Teile der Sende- und/oder Empfangsantenne ein- bzw. aufzusetzen, wobei sich hier besonders das Zusammenwirken mit einem Resonator als Antenne anbietet. Typischerweise kommt es zu keiner störenden Beeinflussung, und der Schwerpunkt der LED-Strahlung, ggf. ergänzt durch geeignete optische Fokussierungsmittel, würde sich dann axial (d. h. entlang der Längsachse durch den Bewegungssockel bzw. die ersten Leuchtmittel) auswärts erstrecken.

Eine alternative Weiterbildung der Erfindung sieht vorteilhaft vor, an dem bzw. im Befestigungssockel, günstig auf der Seite der ersten Leuchtmittel und diesen benachbart, mindestens eine LED, bevorzugt eine Mehrzahl von LEDs, vorzusehen, wobei diese achsparallel zu den ersten Leuchtmitteln, bevorzugt der Gasentladungslampe, ausgerichtet sind und, in der Realisierung als Mehrzahl von LEDs, in der Art eines Rings diese umgeben. Auf diese Weise lässt sich vorteilhaft der Befestigungssockel, insbesondere dessen Randbereich außerhalb des ersten Leuchtmittels, nutzen, um hier zusätzlich preisgünstige, gleichzeitig lichtstarke (gleichwohl nicht notwendigerweise Leistungs-) LEDs einzusetzen, welche dann in der erfindungsgemäß vorteilhaften Weise als zusätzliche Lichtquelle permanent leuchten und/oder nicht durch die Bewegungssensorik aktivierbar sind und damit in der vorbeschriebenen Weise eine Beleuchtungsergänzung anbieten.

Im Gegensatz zu den vorbeschriebenen Ausführungsbeispielen ist diese Variante einer Mehrzahl von ringförmig um das erste Leuchtmittel herum angeordneten LEDs preisgünstig zur realisieren und auf einfache Weise (nämlich hineinreichend in das Sockel- bzw. Gehäuseinnere) zu kontaktieren und elektrisch anzusteuern.

Besonders geeignet ist es zudem, die zweiten Leuchtmittel modulartig auf- bzw. ansteckbar auszugestalten, so dass insbesondere auch in einfacher Form ein Nachrüstbetrieb oder ein Ersatz bei Defekt möglich ist.

Im Ergebnis entsteht durch die neu vorgeschlagene realisierungsgemäße Maßnahme in überraschend einfacher Weise eine sehr wirksame Verbesserung der gattungsgemäßen Technologie, wobei derartige bewegungssensorgesteuerte Leuchtenvorrichtungen in ihrem Einsatzspektrum zusätzlich erweitert werden und insbesondere das Beleuchtungs- und Steuerverhalten von derartigen Vorrichtungen im Hängebetrieb weiter verbessern.

Weitere Vorteile, Merkmale und Einzelheiten der Erfindung ergeben sich aus der nachfolgenden Beschreibung von Ausführungsbeispielen sowie anhand der Zeichnungen; diese zeigen in
- Fig. 1:: eine schematische Seitenansicht der erfindungsgemäßen, bewegungssensorgesteuerten Leuchtenvorrichtung gemäß einer ersten Ausführungsform;
- Fig. 2:: eine Seitenansicht der erfindungsgemäßen, bewegungssensorgesteuerten Leuchtenvorrichtung gemäß einer zweiten, bevorzugten Ausführungsform und schematisch eingezeichneter LED;
- Fig. 3:: eine Querschnittsansicht entlang der Schnittlinie III - III in Fig. 2;
- Fig. 4:: eine Querschnittsansicht analog Fig. 3 entlang der Schnittlinie IV - IV in Fig. 2;
- Fig. 5:: eine schematische Ansicht eines langgestreckten, mit Elektronikbauelementen bestückten Trägerelements für die Bewegungssensoreinheit mit endseitigem Antennenabschnitt und LED;
- Fig. 6:: eine Detailansicht des Ausschnittes VI mit dem endseitigen Antennenabschnitt und LED der Trägerplatine gemäß Fig. 5;
- Fig. 7:: eine Perspektivansicht einer bewegungssensorgesteuerten Leuchtenvorrichtung gemäß einer dritten bevorzugten Ausführungsform mit einem LED-Ring im Befestigungssockel und
- Fig. 8:: einen Längsschnitt durch die dritte Ausführungsform gemäß Fig. 7.

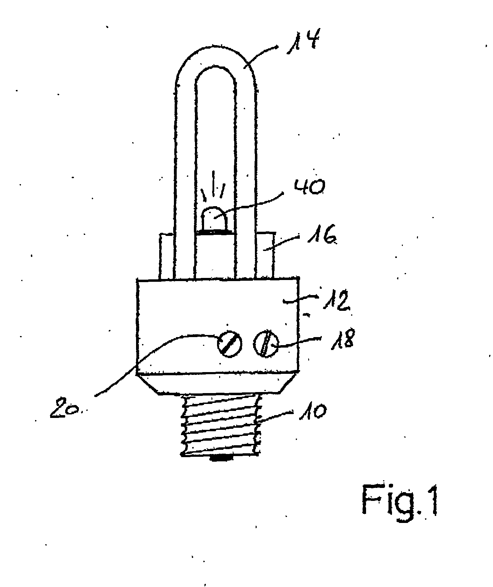

Die in der Fig. 1 schematisch gezeigte Leuchte ist in der äußeren Form Vorrichtungen nachgebildet, wie sie handelsüblich sind und etwa als sog. Energiesparleuchten vertrieben werden. Ein mit einem Schraubsockel 10 für eine gängige Glühlampenfassung versehenes Gehäuse 12 bietet den Raum für die Steuer- bzw. Vorschaltelektronik (nicht im Detail gezeigt) einer Gasentladungslampe 14, die auf übliche Weise mit transformierter Netzspannung betrieben werden kann.

Im Rahmen der vorliegenden Erfindung ist eine solche Leuchte mit einem Bewegungssensor dergestalt verbunden, dass -- wie schematisch durch die flächige Trägerplatine 16 angedeutet -- hinter bzw. zwischen dem eigentlichen Leuchtmittel 14 die Sende- und/oder Empfangsantenne eines Radar-Bewegungssensors angeordnet ist, und dieser Radar-Bewegungssensor im Betrieb über das flächige Trägerelement 16 als Antenne elektromagnetische Wellen ausstrahlt bzw. empfängt. Diese liegen üblicherweise im Bereich zwischen etwa 2 und etwa 20 GHz und sind damit in der Lage, problemlos nicht nur die Leuchtmittelröhre 14 (bzw. darin enthaltenes Leuchtgas) zu durchdringen, sondern auch eine eventuelle Abdeckung oder einen Lampenschirm, der die gezeigte Anordnung im montierten Zustand umgeben kann.

Ein im Rahmen der vorliegenden Erfindung zweckmäßig eingesetzter, auf CW-, Doppler- oder auf Impulsbasis arbeitender Radarsensor ist in gängigen Frequenzbereichen -- 2 GHz, 5,7 GHz oder höher -- betreibbar, sorgt durch die emittierten bzw. reflektierten Radarimpulse für eine befriedigende Durchdringung insbesondere auch des Leuchtmittels 14 und ist auf die gezeigte Weise in besonders platzsparender Weise montierbar.

Die Fig. 1 zeigt mit dem Bezugszeichen 40, wie auf der (als dielektrischer Resonator 16 ausgebildeter Sende- bzw. Empfangsantenne eine Leistungs-LED 40 einer Leistung von einem Watt so aufgesetzt ist, dass diese in der Darstellung der Fig. 1 ihren Schwerpunkt der Lichtstrahlung in aufwärts gerichteter Richtung ausbildet, dabei im von den Leuchtmittelröhren 14 umspannten (aufgespannten) Innenraum sitzt und durch die freie Öffnung des Innenraums nach außen strahlt. Im Gegensatz zur Leuchtmittelröhre 14 (den ersten Leuchtmitteln, die mittels der beschriebenen Bewegungssensorik angesteuert werden) wird die LED 40 als zweite Leuchtmittel im Dauerbetrieb betrieben; zum einen ist die Energieaufnahme der LED so gering, dass selbst bei einem Energiesparbetrieb der Gesamtanordnung der Dauerbetrieb dieser LED vertretbar ist, darüber hinaus würde in der eingangs beschriebenen Art das Problem fehlender Beleuchtung in dunklem Umfeld bei nicht aktiviertem Bewegungssensor wirksam überwunden werden. Während prinzipiell die Farbgebung der LED 40 beliebig ist, würde es sich typischerweise anbieten, die Leuchtfarbe dem Emissionsspektrum der Leuchtmittelröhre 14 anzupassen, also typischerweise weiß zu gestalten.

Insbesondere ist es auch vorgesehen, dass das Leuchtmittel 14 -- nicht wie in Fig. 1 gezeigt -- bogenförmig, sondern spiral- bzw. einfach oder doppelt wendelförmig ausgebildet ist und sich so in Form einer Spirale (vergleichbar der Form eines Tauchsieders) um die senkrecht stehende Antennenplatine 16 herum erstreckt. Insbesondere diese Anordnung ermöglicht eine Optimierung des benötigten Raumes, da der von der gewendelten Leuchtröhre umschlossene Innenraum hier in vorteilhafter Weise zur Aufnahme der Sensorantenne, ggf. sogar zusätzlich der Sensorelektronik, verwendet wird, ohne daß zusätzlicher Raum im (vom EVG belegten) Sockelgehäuse benötigt wird. Bevorzugt ist zudem ein so aufgebautes Sensormodul auf das Gehäuse 12 aufsteckbar, wird von der darin enthaltenen Elektronik mit Betriebsspannung versorgt und macht so gängige Energiesparleuchten mit geringstem Aufwand nachrüstbar.

Der Erfassungsbereich der Bewegungssensoranordnung richtet sich nach dem vorgesehenen Einsatzzweck und wird durch entsprechende Ausgestaltung der Antennenstruktur auf den Träger 16 realisiert; insbesondere ist auch ein kreisförmiger Erfassungsbereich (radialsymmetrisch zur Längsachse durch die Anordnung der Fig. 1) möglich.

Alternativ zur gezeigten Ausbildung als Impuls-Radarsensor ist die Realisierung des Bewegungssensors auch als nach dem Dopplerprinzip arbeitender Radarsensor denkbar. Hier wird eine Bewegung eines Erfassungsobjektes im Erfassungsbereich des Sensors als Frequenzverschiebung zwischen dem ausgestrahlten Signal und dem reflektierten Empfangssignal erfaßt, und diese Frequenzverschiebung (Dopplerfrequenz) wird zur Bewegungs- und Geschwindigkeitserfassung ausgewertet.

Weiter alternativ zur gezeigten Ausbildung ist ein Impuls-Radarsensor denkbar, der nach dem Homodyn-Prinzip arbeitet, und bei welchem breitbandige Sendeimpulse durch ihre Impulsform und -dauer einen wirksamen Erfassungsbereich definieren; gleichzeitig und verzögerungsfrei wird ein solches Sendesignal dann empfangsseitig in den Bewegungssensor eingekoppelt, um ein nicht-lineares Mischerelement aufzusteuern. Das resultierende Mischersignal wird dann zur Bewegungserfassung ausgewertet.

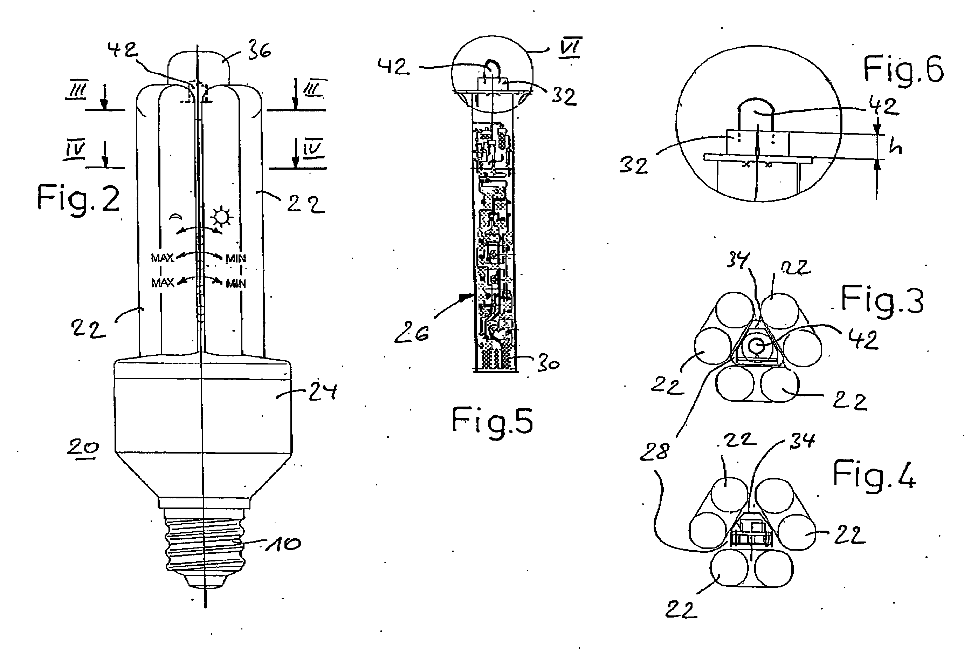

Eine weitere Ausführungsform wird anhand der Fig. 2 bis 6 beschrieben: Eine der Bauart einer handelsüblichen Energiesparleuchte entsprechende Leuchtenvorrichtung 20 weist ein Gasentladungsleuchtmittel auf, welches seinerseits aus drei langgestreckten, am oberen Ende gebogenen Röhrenpaaren 22 besteht, die, vgl. die Schnittansicht in der Fig. 3 und 4, auf einer Oberseite eines Sockelgehäuses 24 eine Dreiecksform beschreiben und damit einen langgestreckten, dreieckförmigen lichten Zwischen- bzw. Innenraum begrenzen.

Während das Sockelgehäuse 24 in ansonsten bekannter Weise eine (in den Figuren nicht gezeigte) Vorschaltelektronik zum Betrieb der Leuchtmittelröhren 22 aufweist, ist die Sensorelektronik samt Sende- und Empfangsantenne auf einer flachen Trägerplatine 26 enthalten, die hinsichtlich ihrer Längen- und Breitenabmessungen so ausgebildet ist, dass sie in den langgestreckt-dreiecksförmigen Zwischenraum 28 einsetzbar ist. Eine Kontaktierung mit der im Sockelgehäuse 24 enthaltenen Leuchten- bzw. Steuerelektronik sowie einer hier vorgesehenen Spannungsversorgung erfolgt über bodenseitige Anschlusskontakte 30 an der Schmalseite der Trägerplatine 26.

Anderenends weist diese eine als dielektrischer Resonator 32 ausgebildete Antenne auf, die, vgl. den Ausschnitt gemäß Fig. 6, eine Zylinderform mit einem Durchmesser von ca. 8 mm und einer Höhe h von ca. 4 mm besitzt.

Auch ist, wie in der Fig. 2 gestrichelt angedeutet und in den Fig. 3, 5, 6 unmittelbar gezeigt, eine LED (1 Watt-Leistungs-LED) so angeordnet, dass diese teilweise in eine Bohrung im Resonator 32 hineinreicht, mit ihrem Leuchtkopf jedoch auch aus diesem hinausragt. Damit wird die Leistungs-LED zum integralen Bestandteil der Trägerplatine 26, kann damit in einfacher Weise zusammen mit deren elektronischen Bauelementen montiert und verdrahtet werden.

Die Trägerplatine 26 ist in der gezeigten Ausführungsform von einem langgestreckten, metallischen Abschirmelement 34 umgeben, aus welchem lediglich endseitig der Resonator 32 herausragt. Wie in Fig. 2 gezeigt, erstreckt sich auch der Resonatorabschnitt oberhalb der Röhrenpaare 22, wobei hier eine Abdeckkappe 36 vorgesehen ist. Dieser ist zweckmäßig und durchlässig für das Emissionsspektrum der LED 42 auszugestalten, z.B. als Plexiglaskappe.

Ergänzend zeigt die Fig. 2 seitlich erreichbare Bedienelemente in Form von geeigneten Stellgliedern auf der Trägerplatine 26, die durch einen Abstand zwischen zwei benachbarten Röhrenpaaren 22 betätigbar sind und zur Anpassung einer Schaltschwelle für die Umgebungshelligkeit (dereigentlich kompensierte -- Helligkeitssensor ist in den Figuren nicht näher gezeigt), einem Erfassungsbereich des Bewegungssensor sowie einer minimalen Leuchtdauer nach einem Einschalten, wenn keine erneute Bewegung erfasst wird, dienen.

In ansonsten bekannter Weise wird diese Vorrichtung in üblichen Leuchtmittel-Schraubfassungen eingesetzt und -- einschließlich der Bewegungssensor- und Helligkeitssteuerelektronik -- über diese mit Betriebsspannung versorgt. Insbesondere im Hängebetrieb (d.h. der umgekehrten Montagerichtung der Bilddarstellungen von Fig. 1 und Fig. 2) würde dann, geeignet auf Dauerlicht eingerichtet, die LED 42 permanent eine unter der Anordnung liegende Fläche, z.B. Tischfläche, hell, gleichwohl energiesparend beleuchten, und bei Annäherung einer Person würden dann die Leuchtmittel 22 zusätzlich aktiviert, wobei die LED 42 auch in diesem Betriebszustand die Beleuchtung in abwärts gerichteter Richtung, also keinem Beleuchtungsmaximum der Leuchtmittel 22, ergänzt.

Weiterbildungsgemäß ist es zudem möglich, die erfindungsgemäße Leuchtenanordnung durch eine Dämmerungs- bzw. Helligkeitssensoreinheit zu ergänzen, die ein Aktivieren bzw. Deaktivieren der ersten und/oder zweiten Leuchtmittel zusätzlich abhängig von einem aktuellen Umgebungslichtpegel macht, und/oder die zusätzlich eine umgebungslichtabhängige Helligkeitseinstellung der Leuchtmittel vornimmt. Auf diesem Wege lässt sich etwa eine Aktivierung der ersten Leuchtmittel durch Bewegung dann verhindern, wenn ein sehr heller Umgebungslichtpegel das Einschalten dieser Leuchtmittel unnötig machen würde.

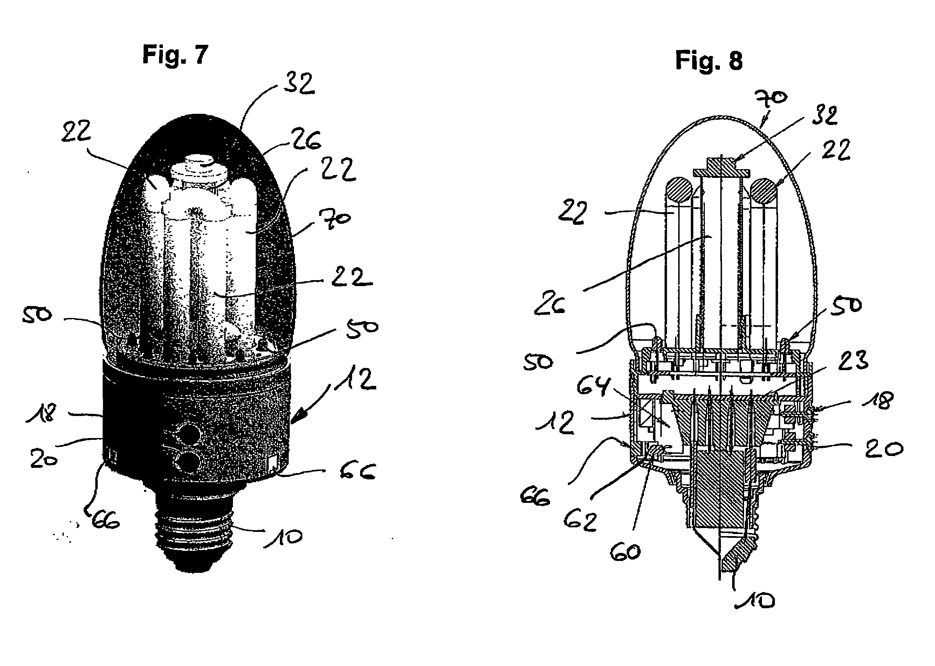

Die Fig. 7 und 8 zeigen eine weitere Ausführungsform der vorliegenden Erfindung. Die Bezugszeichen korrespondieren mit den vorstehenden Ausführungsformen, sofern sie identische bzw. äquivalente Komponenten und Baugruppen bezeichnen.

Entsprechend weist ein als Befestigungssockel dienendes Gehäuse 12 (typischerweise realisiert als Spritzgussteil aus einem Kunststoffmaterial) bodenseitig einen Schraubsockel 10 zum Zusammenwirken mit ansonsten bekannten Leuchtmittelfassungen auf, so dass die gezeigte Vorrichtung in gängige Leuchten eingesetzt werden kann.

Wie die Schnittansicht der Fig. 8 zeigt, enthält das Gehäuse 12 die mit dem Bezugszeichen 23 symbolisch dargestellte Vorschaltelektronik für das Entladungs-Leuchtmittel 22 (als erste Leuchtmittel), ferner ein Paar von Stellstiften 18, 20 für durch einen Benutzer einzustellende Funktionalität in der Vorrichtung, etwa Entfernungs-/Einschaltschwelle des Bewegungssensors (symbolisch als langgestrecktes Modul 26, wie oben beschrieben, und mit endseitiger Resonator-Antenne 32 realisiert). Dieses Ausführungsbeispiel zeigt zusätzlich eine Helligkeitssteuerung (Dämmerungsschaltung), realisiert mittels eines Phototransistors 60 sowie einer Mehrzahl von um den Umfang des Gehäuses 12 herum angeordneten, gehäuseintern mittels eines Lichtleiters 62 optisch verbundenen Lichteintrittsöffnungen 66, wobei ein Helligkeitssignal des Phototransistors 60 gehäuseintern mit einer Helligkeits-Sensorelektronik ausgewertet werden und z. B. bewirken kann, dass beispielsweise bei sehr hellen Umgebungslichtbedingungen überhaupt keine Beleuchtung durch die Leuchtmittel der gezeigten Vorrichtung erfolgt.

Während, analog dem vorgenannten ersten bzw. zweiten Ausführungsbeispiel, die ersten Leuchtmittel in Form der drei Gasentladungsrohre 22 und dem mittigen langgestreckten Hochfrequenzmodul 26 mit stirnseitig hervorstehender Antenne 32 realisiert sind, unterscheidet sich das gezeigte Ausführungsbeispiel der Fig. 7, 8 durch die Realisierung der zweiten Leuchtmittel. Hier sind diese als Ring von insgesamt 8 LEDs 50 implementiert, welche auf einer Flachseite (der Seite der ersten Leuchtmittel 22) des Gehäuses 12 ringförmig und umfangs-randseitig angeordnet sind. Genauer gesagt sind, vergleiche die Schnittansicht der Fig. 8, die LEDs, gemeinsam mit einem Steck- bzw. Befestigungssitz der Entladungsrohre 22, auf einem stirnseitig des Gehäuses 12 vorgesehenen Träger montiert. Die LEDs erstrecken sich dabei entlang der Längsrichtung der Anordnung, so dass ein von den einzelnen LEDs abgestrahlter Lichtkegel entsprechend parallel zur Längsachse, d. h. in der Figurenebene aufwärts, sein Strahlungsmaximum aufweist.

Als LEDs 50 können Leistungs-LEDs (z. B. mit einer Leistung von 1 Watt) verwendet werden, es ist jedoch, je nach Einsatzgebiet und aufgrund der verwendeten Mehrzahl von einzelnen LEDs, durchaus auch genügend, hier preisgünstige und in der elektrischen Leistungsaufnahme reduzierte Kleinleistungs-LEDs einzusetzen.

Wie zudem die Fig. 7 und 8 verdeutlichen, ist das gezeigte Ausführungsbeispiel umschlossen von einer Glaskuppel 70, welche zum einen einen Schutz für die verschiedenen Aggregate bietet, andererseits durch geeignete optische Ausgestaltung (z. B. Einfärbung oder Mattierung) die Gelegenheit zu optischen Effekten bietet und generell der gezeigten Einheit den Charakter einer ansonsten bekannten, einfach handhabbaren Glühbirne oder Energiesparleuchte verleiht. Damit wird auch aus Nutzersicht unmittelbar deutlich, dass sich die vorliegende Vorrichtung ideal eignet, um etwa - für einen bereits vorhandenen Leuchtmittel-Schraubsockel einer Leuchte - eine einfache Glühbirne durch die vorliegende Technologie zu ersetzen, mit den beschriebenen Vorteilen. Zusätzlich nutzt die verwendete Glaskugel 70 den Effekt aus, dass vom HF-Modul 26 (bzw. dem Antennen-Resonator 32) ausgestrahlte HF-Wellen problemlos die Glaskuppel 70 durchdringen, insoweit also gerade die verwendete Hochfrequenz-Bewegungstechnologie synergistisch mit der gezeigten, mittels der Kuppel geschützten Einheit zusammenwirkt.

Als zusätzliche Weiterbildung (in den Figuren nicht gezeigt) ist es möglich, die erfindungsgemäße Vorrichtung mit einer Zeitsteuerung dergestalt zu versehen, dass -- tageszeitabhängig -- verschiedene Betriebsmodi der Leuchtenvorrichtung möglich sind: Zu vorbestimmten Zeiten werden etwa die ersten Leuchtmittel im Dauerbetrieb betrieben, ohne dass eine Bewegungsdetektion notwendig ist; zu sonstigen Zeiten wird die Leuchtmittelaktivierung durch den Bewegungssensor getriggert, der mittels der Trägerplatine und der endseitigen Resonatorantenne 32 in den vorliegenden Ausführungsbeispielen realisiert ist.

## Patentansprüche

1. Bewegungssensorgesteuerte Leuchtenvorrichtung mit einem auf einem Befestigungssockel (12; 20) gehaltenen, mit seinen Außenwänden einen lichten Innen- und/oder Zwischenraum (28) außerhalb des Befestigungssockels begrenzenden ersten Leuchtmittel (14; 22), insbesondere einer Gasentladungslampe, und einem zum Aktivieren oder Deaktivieren der ersten Leuchtmittel als Reaktion auf eine erfasste Bewegung eingerichteten Bewegungssensor (26; 32),
wobei der Bewegungssensor ein auf einem Trägermodul (26) gebildeter Mikrowellensensor mit einer Sende-und/oder Empfangsantenne (16; 32) und einer zugeordneten Sensorelektronik ist, das so auf oder in dem Befestigungssockel (12; 20) vorgesehen ist, dass das Trägermodul mit zumindest einem Teilbereich in dem Innen- und/oder Zwischenraum aufgenommen ist,
**dadurch gekennzeichnet, dass**
zweite Leuchtmittel (40; 42; 50) auf oder an dem Befestigungssockel vorgesehen und so ausgerichtet sind, dass eine Lichtemission der zweiten Leuchtmittel einen Emissionsschwerpunkt in einer einem Netzanschlussbereich (10) des Befestigungssockels (12; 20) entgegengesetzten Richtung ausbildet.

2. Leuchtenvorrichtung nach Anspruch 1, **dadurch gekennzeichnet, dass** die zweiten Leuchtmittel mindestens eine LED aufweisen, insbesondere eine Leistungs-LED einer Leistung zwischen 0,3 und 3 Watt.

3. Leuchtenvorrichtung nach Anspruch 1 oder 2, **dadurch gekennzeichnet, dass** die zweiten Leuchtmittel nicht durch den Bewegungssensor aktiviert oder deaktiviert werden.

4. Leuchtenvorrichtung nach einem der Ansprüche 1 bis 3, **dadurch gekennzeichnet, dass** die zweiten Leuchtmittel für einen Dauer-Leuchtbetrieb eingerichtet sind.

5. Leuchtenvorrichtung nach einem der Ansprüche 1 bis 4, **dadurch gekennzeichnet, dass** die ersten Leuchtmittel (14; 22) ein gekrümmtes Gasentladungsrohr aufweisen, das sich aufwärts von dem in eine Lampenfassung einsetzbaren Befestigungssockel erstreckt.

6. Leuchtenvorrichtung nach einem der Ansprüche 1 bis 5, **dadurch gekennzeichnet, dass** die ersten Leuchtmittel eine Mehrzahl zueinander parallel verlaufender, langgestreckter Rohrabschnitte aufweisen, die den Innen-und/oder Zwischenraum für das Trägermodul ausbilden.

7. Leuchtenvorrichtung nach einem der Ansprüche 1 bis 6, **dadurch gekennzeichnet, dass** die zweiten Leuchtmittel auf oder an dem Trägermodul zumindest teilweise im Innen- und/oder Außenraum, so vorgesehen sind, dass diese entlang einer Längsachse durch den Befestigungssockel ausgerichtet sind.

8. Leuchtenvorrichtung nach einem der Ansprüche 1 bis 7, **dadurch gekennzeichnet, dass** der Befestigungssockel eine Vorschaltelektronik für zumindest die ersten Leuchtmittel sowie Kontaktmittel für das Trägermodul aufweist.

9. Leuchtenvorrichtung nach einem der Ansprüche 1 bis 8, **gekennzeichnet durch** eine Vorrichtung zum Erfassen der Umgebungshelligkeit, wobei diese Vorrichtung so auf die ersten und/oder die zweiten Leuchtmittel wirkt, dass eine Aktivierung oder Deaktivierung von einem aktuellen Pegel der Umgebungshelligkeit abhängig ist.

10. Leuchtenvorrichtung nach Anspruch 9, **gekennzeichnet durch** Mittel zur Eigenlichtkompensation der ersten und/oder zweiten Leuchtmittel, insbesondere eine Einheit zur Schwellwertverschiebung einer Ansprechschwelle der Aktivierung oder Deaktivierung um eine von den ersten Leuchtmitteln selbst erzeugten Lichtmenge.

11. Leuchtenvorrichtung nach einem der Ansprüche 1 bis 10, **dadurch gekennzeichnet, dass** der Bewegungssensor als Steckmodul ausgebildet und an dem Befestigungssockel abnehmbar befestigbar ist.

12. Leuchtenvorrichtung nach einem der Ansprüche 1 bis 11, **dadurch gekennzeichnet, dass** die zweiten Leuchtmittel in Form einer Mehrzahl von LEDs randseitig und bevorzugt ringförmig verteilt auf der Seite der ersten Leuchtmittel am Befestigungssockel angeordnet sind.

13. Leuchtenvorrichtung nach einem der Ansprüche 1 bis 12, **dadurch gekennzeichnet, dass** der Befestigungssockel eine transparente Kuppel, insbesondere eine Glaskuppel, so aufweist, dass diese die ersten und die zweiten Leuchtmittel umschließt.

14. Leuchtenvorrichtung nach einem der Ansprüche 1 bis 13, **dadurch gekennzeichnet, dass** der Befestigungssockel ein zum Zusammenwirken mit einem Leuchtmittel-Schraubsockel ausgebildeten Außengewindeabschnitt (10) im Netzanschlussbereich aufweist und so dimensioniert ist, dass die Leuchtenvorrichtung als Ersatz für eine Glühlampe oder Energiesparleuchte in Leuchtenvorrichtungen betrieben werden kann.
